# EUROPÄISCHE PATENTSCHRIFT

(11) **EP 3 940 314 B1**
(45) Veröffentlichungstag und Bekanntmachung des Hinweises auf die Patenterteilung: **15.02.2023**
(21) Anmeldenummer: 21179410.2
(22) Anmeldetag: 15.06.2021
(51) Int. Cl.: F25B 1/00, F24F 12/00, F24F 5/00, F24F 13/30, F24F 13/20, F24F 11/36, F25B 49/00

(54) **SICHERHEITSSPÜLVORRICHTUNG FÜR EINE WÄRMEPUMPE**
SAFETY COIL DEVICE FOR A HEAT PUMP
DISPOSITIF DE RINÇAGE DE SÉCURITÉ POUR UNE POMPE À CHALEUR

(30) Priorität: 16.07.2020 DE 102020118778
(43) Veröffentlichungstag der Anmeldung: 19.01.2022
(73) Patentinhaber: Vaillant GmbH, 42859 Remscheid (DE)
(72) Erfinder: Lis, Raimund, 42369 Wuppertal (DE); Forner, Pascal, 42857 Remscheid (DE); Hiegemann, Markus, 44791 Bochum (DE); Grünwald, Tobias, 44894 Bochum (DE); Reckhaus, Birgit, 42859 Remscheid (DE)
(74) Vertreter: Popp, Carsten

(56) Entgegenhaltungen:
- EP-A1- 3 653 944
- CN-Y- 2 512 465
- DE-A1-102007 016 345
- JP-A- 2005 241 121

## Beschreibung

Die Erfindung betrifft irreguläre Zustände in Kältekreisen, in denen ein als Kältemittel wirkendes, gefährliches Arbeitsfluid in einem thermodynamischen Kreisprozess, wie zum Beispiel dem Clausius-Rankine-Kreisprozess, geführt wird. Vorwiegend sind dies Wärmepumpen, Klimaanlagen und Kühlgeräte, wie sie in Wohngebäuden gebräuchlich sind. Insbesondere betrifft die Erfindung eine Wärmepumpe, die innerhalb eines Wohngebäudes aufgestellt wird und auch Belüftungszwecke erfüllt.

Unter Wohngebäuden werden dabei Privathäuser, Miethauskomplexe, Krankenhäuser, Hotelanlagen, Gastronomie und kombinierte Wohn- und Geschäftshäuser verstanden, in denen Menschen dauerhaft leben und arbeiten, im Unterschied zu mobilen Vorrichtungen wie KFZ-Klimaanlagen oder Transportboxen, oder auch Industrieanlagen oder medizintechnischen Geräten. Gemeinsam ist diesen Kreisprozessen, dass sie unter Einsatz von Energie Nutzwärme oder Nutzkälte erzeugen und Wärmeverschiebungssysteme bilden.

Die zum Einsatz kommenden thermodynamischen Kreisprozesse sind seit langem bekannt, ebenso die Sicherheitsprobleme, die bei der Verwendung geeigneter Arbeitsfluide entstehen können. Abgesehen von Wasser sind die bekanntesten damaligen Arbeitsfluide brennbar und giftig. Sie führten im vergangenen Jahrhundert zur Entwicklung der Sicherheitskältemittel, die aus fluorierten Kohlenwasserstoffen bestanden. Es zeigte sich jedoch, dass diese Sicherheitskältemittel die Ozonschicht schädigen, zur Klimaerwärmung führen, und dass ihre sicherheitstechnische Unbedenklichkeit zu konstruktiven Unachtsamkeiten führte. Bis zu 70 % des Umsatzes entfiel auf den Nachfüllbedarf undichter Anlagen und deren Leckageverluste, der hingenommen wurde, solange dies im Einzelfall als wirtschaftlich vertretbar empfunden wurde und Bedarf an Ersatzbeschaffung förderte.

Der Einsatz dieser Kältemittel wurde aus diesem Grund Restriktionen unterworfen, in der Europäischen Union beispielsweise durch die F-Gas-Verordnung (EU) 517/2014. Dadurch werden praktisch alle ungefährlichen Sicherheitskältemittel verboten und es bleiben nur noch gefährliche Arbeitsfluide und Wasser zur Auswahl. Gefährlich bedeutet in diesem Fall, dass sie entweder giftig sind, wie zum Beispiel Ammoniak, oder entzündlich oder explosiv in Verbindung mit Luftsauerstoff sein können, jedoch kaum umweltschädlich sind.

Es ist daher einerseits äußerst problematisch, die konstruktiven Prinzipien für Kältemittel-führende thermodynamische Prozesse zu übernehmen, die sich bei Sicherheitskältemitteln scheinbar gut bewährt haben, andererseits auf die Anlagenkonzepte aus der Zeit vor Einführung der Sicherheitskältemittel aufzusetzen. Dies liegt auch daran, dass inzwischen aus Einzelgeräten komplexe Anlagen geworden sind, was die Anzahl der Möglichkeiten für Störungen und deren Folgen vervielfältigt hat. Hierdurch ergeben sich beispielhaft die folgenden Anforderungen an das Sicherheitskonzept:
- Im Normalbetrieb muss die Anlage absolut dicht sein.
- Weder bei einer Leckage im Kondensator noch bei einer Leckage im Verdampfer darf

Arbeitsfluid in den gekoppelten Nutzwärme- oder Nutzkältekreislauf gelangen.
- Es darf kein Arbeitsfluid aus dem Kältekreislauf unbemerkt entweichen können.
- Im Verdichter darf das Arbeitsfluid nicht durch die Lagerung entweichen.
- Im Entspannungssystem darf das Arbeitsfluid nicht durch den Ventilsitz diffundieren oder durch Kavitation zu Leckagen führen.
- Gekapselte Teile müssen für Wartungs- und Kontrollzwecke zugänglich bleiben.
- In Notfällen dürfen sich keine Gefahren einstellen.
- Die Anlage soll in vorhandene Räumlichkeiten integrierbar sein
- Das Kältemittel bzw. Arbeitsfluid soll abgelassen und eingefüllt werden können.

Der Begriff des Notfalls muss weit gesehen werden. Denkbar sind externe Ursachen wie Stromausfälle, Erdbeben, Erdrutsche, Überschwemmungen, Brände und klimatische Extrembedingungen sowie interne Ursachen wie technische Fehler oder Bedienungsfehler. Sofern die Anlagen in einem Netzwerk betrieben werden, ist auch ein Netzausfall oder eine Netzstörung als Notfall anzusehen. Gegenüber solchen Gefahren oder Störungen soll die Vorrichtung inhärent sicher sein. Aber auch ein Ausfall der verfügbaren Primärenergie kann einen Notfall begründen und darf keine Gefahrentwicklung zur Folge haben. Alle diese Notfälle können auch kombiniert auftreten; zu unterscheiden ist ferner, ob der Notfall nur ein Bedrohungsszenario darstellt oder ob bereits eine Havarie eingetreten ist.

Eine Luft-Wasser-Wärmepumpe gemäß dem Oberbegriff des Anspruchs 1 ist aus der Patentschrift DE 10 2007 016345 A1 bekannt.

Die auftretenden Probleme bei der Sicherheitsauslegung solcher Anlagen werden in der WO 2015/032905 A1 anschaulich beschrieben. So liegt die untere Zündgrenze von R290 als Arbeitsfluid etwa bei 1,7 Volumenprozent in Luft, was 38 g/m³ in Luft entspricht. Sofern der Kälteprozess in einem ihn umgebenden, hermetisch abgeschlossenen, ansonsten aber luftgefüllten Raum mit dem Arbeitsfluid R290 durchgeführt wird, stellt sich das Problem der Erkennung einer kritischen, explosiven Situation nach einer Störung, bei der das Arbeitsfluid in diesen hermetisch abgeschlossenen Raum austritt. Elektrische Sensoren zur Erkennung kritischer Konzentrationen sind nur schwierig explosionsgeschützt auszuführen, weswegen gerade die Propan-Erkennung durch die Sensoren selbst das Explosionsrisiko erheblich verschärft, ausgenommen hiervon sind Infrarotsensoren. R290 ist auch giftig, bei Inhalation oberhalb einer Konzentration von ca. 2 g/m³ stellen sich narkotische Effekte, Kopfschmerzen und Übelkeit ein. Dies betrifft Personen, die ein erkanntes Problem vor Ort lösen sollen, noch bevor Explosionsgefahr entsteht.

R290 ist auch schwerer als Luft, sinkt also in ruhender Luft auf den Boden und sammelt sich dort an. Sollte sich also ein Teil des Propans in einer strömungsarmen Zone des abgeschlossenen Raums, in dem sich das gestörte Aggregat befindet, sammeln, können die lokalen Explosionsgrenzen wesentlich schneller erreicht werden, als es der Quotient aus Gesamtraumvolumen zu ausgetretener R290-Menge erwarten lässt. Die WO 2015/032905 A1 sucht dieses Problem zu lösen, indem ein Generator für elektrischen Strom in die Öffnung bzw. deren Verriegelung dieses Raums integriert wird und bei deren Betätigung in einem ersten Schritt die elektrische Energie erzeugt und bereitstellt, mit der der Sensor aktiviert wird, und der im Alarmfall die Verriegelung dann nicht freigibt, sondern eine Lüftung des abgeschlossenen Raums veranlasst, und erst in einem zweiten Schritt eine Entriegelung und Öffnung zulässt.

Die DE 10 2009 029 392 A1 beschreibt eine explosionsgeschützte Kälteanlage, bei der ein Lüfter die kontaminierte Luft innerhalb einer gasdichten Umhausung im Falle einer Leckage die Umhausung leersaugt, nachdem alle Geräte ausgeschaltet worden sind. Die Leckage wird durch einen Gassensor detektiert. Das abgezogene Gemisch wird in die Umgebung gefördert, wo es sich in kürzester Zeit mit Umgebungsluft vermischt und soweit verdünnt wird, dass kein explosives Gemisch mehr vorliegt. Die Vorrichtung soll überall da eingesetzt werden, wo Kälteanlagen zur Kühlung benötigt werden und gleichzeitig ein Wärmebedarf vorhanden ist, und wird bevorzugt in einer Supermarktkälteanlage eingesetzt.

Die DE 20 2016 103 305 U1 beschreibt eine explosionsgeschützte Vorrichtung zum Temperieren von Wärmeträgerfluiden auf unterschiedlichen Temperaturniveaus aufweisend eine Umhausung, ein Grundelement, einen geschlossenen Kältemittelkreislauf mit den üblichen Apparaten, eine Absaugvorrichtung mit einem Lüfter und einem Gassensor zur Detektion von entzündlichem Gas. Die Wärmeübertrager sind außerhalb der Umhausung positioniert. Sofern der Sensor anschlägt, wird eine Leckage vermutet und der Lüfter saugt das Gemisch aus der Umhausung in einen Kanal, der an einen Ort außerhalb der Umhausung führt. Die Vorrichtung hat seinen bevorzugten Einsatzort in einem Einkaufszentrum.

Die vorgestellten Systeme sind aufwendig, sie hatten am Markt bislang nur wenig Erfolg. Dies kann auf die folgenden Gründe zurückgeführt werden:
- Montagefreundlichkeit: Zusammenbau, Inbetriebnahme und Wartung müssen ohne großen Aufwand vor Ort möglich sein. Dies schließt große und schwere Druckbehälter weitgehend aus, ferner Systeme, die nach einer Havarie nicht mehr demontierbar sind.
- Diagnosefreundlichkeit: Die Betriebszustände sollten von außen gut erkennbar sein, dies betrifft die Sichtbarkeit und Prüfbarkeit bezüglich möglicher Leckagen.
- Wartungsfreundlichkeit: Systemdiagnosen sollten ohne großen zusätzlichen Aufwand erfolgen können. Sicherheitsrelevante Systeme sollten regelmäßig getestet bzw. auf ihre Zuverlässigkeit geprüft werden können. Sofern Systemdiagnosen nicht einfach durchführbar sind, sollten möglicherweise belastete Teile leicht durch Neuteile austauschbar sein.
- Ausfallsicherheit: Die Systeme sollen einerseits gegen Störungen gesichert sein, gleichzeitig aber zuverlässig laufen können, wenigstens im Notbetrieb. Im Falle einer vorübergehenden externen Störung sollten die Systeme entweder selbstständig wieder anfahren oder ohne großen Aufwand wiederangefahren werden können.
- Energieeffizienz: Die Anlagen sollen energetisch günstig betrieben werden können, ein hoher Eigenverbrauch an Energie für Sicherheitsmaßnahmen wirkt dem entgegen.
- Robustheit: Im Falle größerer Störungen, seien sie extern oder systemintern aufgeprägt, muss die Beherrschbarkeit gewährleistet sein, dies betrifft z.B. Lüftungssysteme, die verstopfen können oder Druckbehälter, die unter Druck stehen oder heiß werden, etwa bei einem Brand.
- Kosten: Die Sicherheitsmaßnahmen sollen weder bei den Anschaffungskosten noch bei den laufenden Kosten bedeutend sein und die Einsparungen bei den Energiekosten gegenüber herkömmlichen Systemen übersteigen. Sie sollen günstig sein.

Die Anforderungen schließen sich zumeist gegenseitig aus und erzeugen außerdem Zielkonflikte in großer Zahl. Hinzu kommt eine weitere Anforderung für den Fall, dass das Wohngebäude belüftet bzw. klimatisiert werden soll. In solchen Fällen werden bisher Kombigeräte verwendet, die aus Belüftungsgerät, Wärmepumpe und Klimagerät bestehen. Die Außenluft gelangt von außen in das Kombigerät. Über einen Filter wird die Außenluft gereinigt und einem Wärmeübertrager zugeführt. Der Wärmeübertrager überträgt die Wärme der Abluft an die Außenluft. Die erwärmte Außenluft wird als Zuluft in die Wohnung geführt. Die Abluft der Wohnung wird in das Kombigerät geführt. Über einen Filter wird die Abluft gereinigt und einem Wärmeübertrager zugeführt. Der Wärmeübertrager entzieht der Abluft die Wärme und betreibt so Wärmerückgewinnung. Die abgekühlte Abluft wird als Fortluft nach außen geführt.

Die Belüftungsfunktion hat dabei die wichtige Aufgabe des Raumluftwechsels und der Regulierung der Raumfeuchtigkeit, wenn das Gebäude über dicht schließende Fenster verfügt, die der verbesserten Wärmedämmung dienen, sowie über gedämmte Wände mit Diffusionssperren.

In Sommernächten kann die Außentemperatur unter der Raumtemperatur liegen. Durch den automatischen Bypass wird die kühlere Außenluft nicht mehr durch den Wärmeübertrager vorgewärmt. Der Bypass leitet die wärmere Abluft am Wärmeübertrager vorbei und direkt nach außen. Derartige innen aufgestellten Kombigeräte können bislang nicht mit explosiven Arbeitsfluiden betreiben werden.

Bei Frost reduziert die Frostschutzfunktion bedarfsabhängig den Zuluftvolumenstrom, was zu einer Anhebung der Fortlufttemperatur führt. Dadurch wird ein Vereisen des Wärmeübertragers verhindert. Wenn die Reduktion des Zuluftvolumenstroms nicht mehr ausreicht, dann schaltet das Kombigerät ab. Der Feuchtefühler erfasst die aktuelle Feuchtigkeit der Abluft. Wenn der Automodus eingestellt ist, dann wird der aktuelle Luftvolumenstrom bedarfsabhängig reguliert. Im Winter kann die Raumluftfeuchtigkeit als trocken empfunden werden. Ein optionaler Enthalpie-Wärmeübertrager, also ein Wärmeübertrager mit Feuchterückgewinnung, wirkt dem entgegen. In allen diesen Fällen muss immer sichergestellt werden, dass im Leckagefall niemals entzündliches Arbeitsfluid in den Belüftungskreislauf gelangen kann.

Ein Beispiel aus dem bekannten Stand der Technik ist das recoCOMPACT-exclusive-System; wie es in der Firmendruckschrift "Luft/Wasser-Wärmepumpen, Zukunftssicher heizen - mit Wärme aus der Luft" , Vaillant GmbH 09/2018, Seiten 8 und 9 beschrieben ist und welches den nächstliegenden Stand der Technik bildet.

Es ist auch bekannt, entzündliche und explosive Arbeitsfluide im Falle von Leckagen einfach ins Freie abzulassen. So erklärt die "Bundesfachschule Kälte Klima Technik" im Mai 2012, der Einfluss auf die globale Erderwärmung bei R290 sei sehr gering, daher sei das Ablassen in die Atmosphäre die bisher übliche Vorgehensweise, um dieses Kältemittel zu entsorgen. Es seien aber gewisse Sicherheitsvorkehrungen zu treffen, die das Auftreten einer explosionsfähigen Atmosphäre weitestgehend minimierten.

Die Aufgabe der Erfindung ist daher, eine Vorrichtung und ein Verfahren für eine sichere und effiziente Spülung eines Gehäuses für eine Wärmepumpe bereitzustellen, das in einem Wohngebäude aufgestellt ist, und in dessen Inneren ein linksdrehender thermodynamischer Kreisprozess in einem geschlossenen, hermetisch dichten Arbeitsfluidumlauf mittels eines Arbeitsfluids durchgeführt wird, und das Gerät auch eine Belüftungsfunktion aufweist.

Die Erfindung löst diese Aufgabe mittels mit Belüftungsfunktion zur sicheren Durchführung eines linksdrehenden thermodynamischen Kreisprozesses mittels eines gefährlichen Arbeitsfluids, welches in einem geschlossenen, hermetisch dichten Arbeitsfluidumlauf geführt wird, geeignet zur Aufstellung in einem Gebäude, aufweisend
- ein Wärmepumpengehäuse,
- mindestens einen Verdichter für Arbeitsfluid,
- mindestens eine Entspannungseinrichtung für Arbeitsfluid,
- mindestens zwei Wärmeübertrager für Arbeitsfluid mit jeweils mindestens zwei Anschlüssen für Wärmeüberträgerfluide,
- mindestens eine Frischluftleitung für Außenluft aus der Umwelt außerhalb des Gebäudes in das Gehäuse,
- Leitungen für Abluft aus dem Gebäude in das Gehäuse,
- ein Mauerdurchbruch für Fortluft an die Umwelt außerhalb des Gebäudes,
- ein Fördergebläse für Abluft,
- einen Wärmetauscherlüfter zur Förderung der Fortluft aus dem Gebäude, wobei
- eine Teilkapselung, bestehend aus einem Unterteil, einem Oberteil, einem Mittelteil und einer Rückschlagklappe, vorgesehen wird,
- das Unterteil den Verdichter, die Entspannungseinrichtung, einen der Wärmeübertrager enthält,
- das Oberteil die Anschlüsse für Außenluft und Abluft enthält,
- das Mittelteil den anderen Wärmeübertrager, den Wärmetauscherlüfter und Strömungsleiteinrichtungen für Spülluft enthält,
- die Rückschlagklappe so eingerichtet ist, dass eine Rückströmung in das Abluftsystem über die Abluft unterbunden wird,
- und die Teilkapselung dicht gegenüber den übrigen Einrichtungen des Gehäuses der Wärmepumpe ausgeführt ist.

In einer Ausgestaltung der Luft-Wasser-Wärmepumpe ist vorgesehen, dass eine oder mehrere Leitschaufeln im Luftstrom der Fortluft, bevor diese den Mauerdurchbruch erreicht, angeordnet werden, die einen Teilstrom der Fortluft als Spülluft in das Unterteil der Teilkapselung einleiten. In einer weiteren Ausgestaltung ist vorgesehen, dass die Leitschaufeln verstellbar sind. Dadurch kann erreicht werden, dass die Spülung im Normalbetrieb nur schwach und im Leckagefall besonders stark ausgeprägt wird.

Weitere Ausgestaltungen betreffen die Verwendung eines gefährlichen Arbeitsfluides in der so ausgestatteten Luft-Wasser-Wärmepumpe. Hierbei wird vorgesehen, dass es sich bei dem gefährlichen Arbeitsfluid um ein in Verbindung mit Luft entzündliches oder explosives Arbeitsfluid handelt. Vor allem ist vorgesehen, dass das Arbeitsfluid Propan enthält oder R290 ist.

Eine weitere Ausgestaltung betrifft den Fall, dass hinter dem Mauerdurchbruch keine Einleitung ins Freie erfolgt, sondern ein Luftkanal oder ein Lichtschacht vorgesehen ist. Ein solcher Luftkanal kann beispielsweise aus Schallschutzgründen nützlich sein, oder aus Gründen des Nachbarschaftsfriedens gefordert werden. Und wenn die Vorrichtung unterhalb der Erdoberfläche errichtet werden soll, kann auf einen Lichtschacht nicht verzichtet werden.

Um eine Zündung eines zündfähigen Gemisches sicher zu verhindern, ist daher eine Zugabe eines Löschmittels vorgesehen. Hierbei wird ein automatischer Feuerlöscher mit einem ABC-Pulver oder BC-Pulver eingesetzt, und zwar bevor es brennt. Das zur Brandbekämpfung übliche Mittel wird also untypisch eingesetzt, weiterhin wird es entgegen üblicher Vorgehensweisen gegen drohenden Gasbrand verwendet und im Fortluftkanal unter Druck zerstäubt. Es wird also der Fortluftkanal mit Ammoniumhydrogenphosphat, Ammoniumsulfat oder Natriumhydrogencarbonat geflutet. Auch andere Chemikalien, die freie Radikale binden, wie sie in einer Verbrennungsreaktion gebildet werden, sind einsetzbar. Durch vorheriges Binden freier Radikale wird die Zündung sicher verhindert.

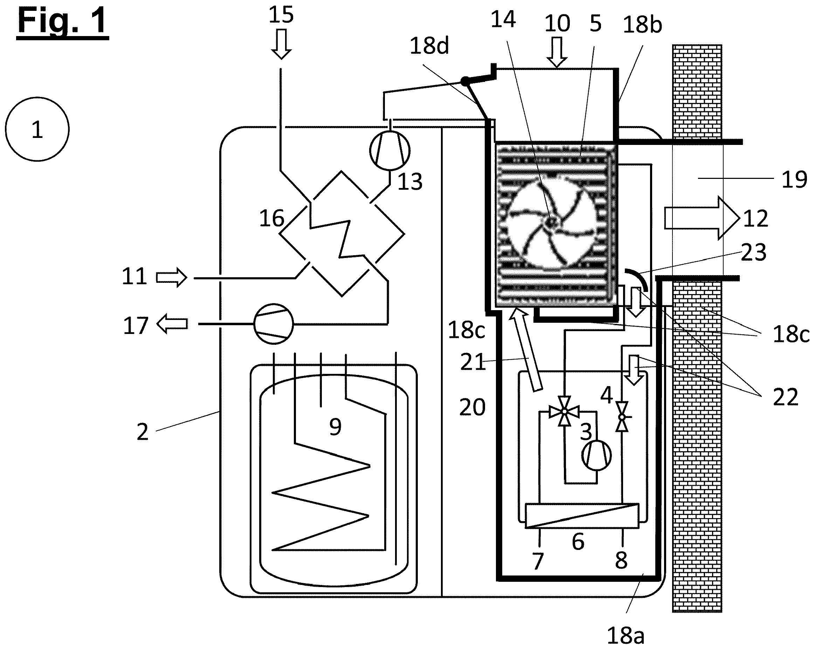

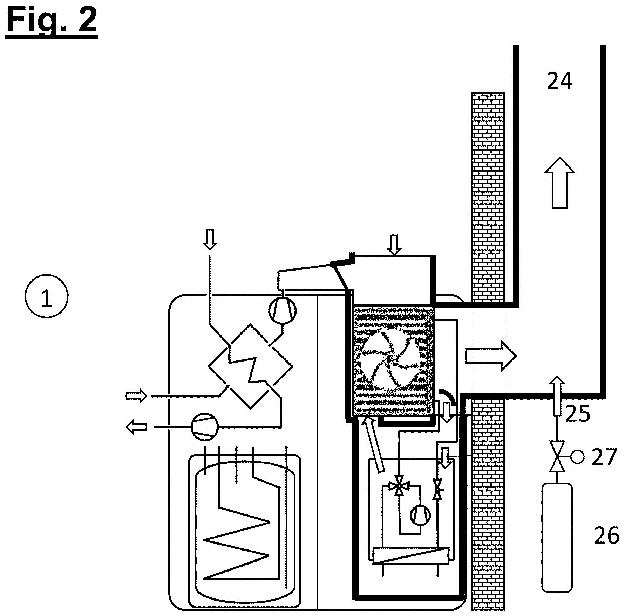

Die Erfindung wird nachfolgend anhand zweier Beispiele näher erläutert. Dabei zeigen die Fig. 1 schematisch ein Kombigerät, welches in einem Wohngebäude steht und die Fig. 2 einen zusätzlichen Kanalanschluss außerhalb des Gebäudes.

Fig. 1 zeigt ein Wohngebäude 1, welches mit einer Luft-Wasser-Wärmepumpe, die auch als Klimaanlage, als Belüftungsanlage und als Heißwassergerät genutzt werden kann, und als Kombigerät ausgeführt ist. Das Kombigerät steht direkt an einer Außenwand des Gebäudes, wobei diese Außenwand mindestens einen Mauerdurchbruch 19 aufweist. Hinter oder in diesem Mauerdurchbruch 19 befinden sich nur Schutzvorrichtungen gegen unbefugtes Eindringen von Menschen und Tieren sowie ein Witterungs- und ein Lärmschutz, jedoch weder ein Schacht noch ein Luftkanal. Der Mauerdurchbruch entlüftet direkt ins Freie.

Das Kombigerät wird umfasst vom Gehäuse 2 und ist ausgestattet mit einem Kältekreis, bestehend aus einem Verdichter 3, einen Expansionsventil 4, einem Luft-Wärmetauscher 5 und einem Heizkreiswärmetauscher 6, der mittels der Anschlüsse 7 und 8 mit dem Warmwasserbehälter 9 verbunden ist. Alle Einrichtungen sind explosionsgeschützt ausgeführt. Im Heizfall wird die Wärme aus der Außenluft 10 und der Abluft 11 aus dem Gebäude 1 bezogen, indem die Luft mittels des Fördergebläses 13 und des Wärmetauscherlüfters 14 durch den Luft-Wärmetauscher 5 gefördert wird. Die Fortluft 12 verlässt das Gehäuse 2 und das Gebäude 1. Die Frischluft 15 wird aus der Umgebung des Gebäudes 1 angesaugt und im Lüftungswärmetauscher 16 erwärmt. Die Wärme wird dabei der Abluft 11 entnommen. Die erwärmte Frischluft 17 wird zur Belüftung in das Gebäude 1 geleitet. Bis dahin ist alles bekannter Stand der Technik, veröffentlicht beispielsweise in der Druckschrift zur RecoCompact, siehe oben.

Bei entzündlichen Arbeitsfluiden ist jedoch zusätzlich sicherzustellen, dass solches Arbeitsfluid in Leckagefällen weder in die Frischluftzufuhr ins Gebäude noch direkt ins Gebäude gelangen kann. Dies gilt gleichermaßen für alle Betriebszustände, den ruhenden Betrieb, den Wiederanfahrbetrieb und den Umschaltbetrieb als Klimaanlage.

Dies geschieht durch die Teilkapselung 18, bestehend aus einem Unterteil 18a, einem Oberteil 18b, einem Mittelteil 18c und der Rückschlagklappe 18d. Die Teilkapselung 18 bewirkt, dass leckagebedingt austretendes Arbeitsfluid weder in den Bereich der Lüftung und der Warmwasserbereitung gelangen kann, noch in das Gebäude, in dem das Gehäuse der Wärmepumpe aufgestellt ist.

Das Unterteil 18a dichtet dabei die Teile, die Arbeitsfluid enthalten, nach unten hin ab, reicht nach oben bis zum Luft-Wärmetauscher 5 und ist nach oben teilweise offen. Es kann den Arbeitsfluidumlauf wie gezeigt in einem separat gekapselten Gehäuse 20 enthalten oder dessen einzelne Teile separat aufnehmen.

Das Oberteil 18b schließt die Teilkapselung nach oben ab, wobei aber die Verbindung zur Außenluft 10 offen bleibt. Die Rückschlagklappe 18d verhindert, dass leckagebedingt aus dem Bereich der Teilkapselung 18 ausgeströmtes Arbeitsfluid bei einer Abschaltung in den Lüftungsbereich zurückströmen kann. Das Oberteil reicht nach unten bis zum Luft-Wärmetauscher 5.

Das Mittelteil 18c trennt den Wärmetauscherlüfter 14 von den übrigen Bereichen ab und bewirkt, dass auf der Zuströmseite des Lüfters aus dem Unterteil 18a ein Unterdruck entsteht, während auf der Abströmseite ein Überdruck entsteht. Diese Druckdifferenz bewirkt, dass das Unterteil 18a immer durchspült wird. Zu diesem Zweck ist das Mittelteil 18c so gestaltet, dass ein Teilstrom 21 der vom Wärmetauscherlüfter 14 geförderten Fortluft abgezweigt wird, typischerweise zwischen 2 und 10 Prozent der Fortluftmenge, das Unterteil 18b spült und dieser Teilstrom 22 vor den Wärmetauscherlüfter 14 rezykliert wird. Sofern sich eine Leckage ergibt, findet auf diese Weise sowohl im Unterteil 18c als auch in der Fortluft eine erhebliche Verdünnung statt, womit die Bildung eines zündfähigen Gemisches sicher verhindert wird.

Es ist dabei vorteilhaft, einen Radialventilator als Wärmetauscherlüfter 14 zu verwenden, dessen Zuströmseite auf die Durchtrittsfläche des Luft-Wärmetauschers 5 gerichtet ist, wobei dieser Luft-Wärmetauscher als Lamellenwärmetauscher ausgebildet ist. Im Falle einer Leckage des Luftwärmetauschers 5 wird die Spülluft, die aus dem Unterteil 18a abgesaugt wird, mit der Luft gemischt, die durch den Luft-Wärmetauscher 5 hindurchgetreten ist. Zweckmäßigerweise sind auch die Anschlüsse des Arbeitsfluids in dieser Fläche angeordnet.

In einer Ausgestaltung ist vorgesehen, dass an der Austrittsfläche des Wärmetauscherlüfters 14 Leitschaufeln 23 vorgesehen werden, die einen Teil des austretenden Luftstroms in das Unterteil 18a leiten. In einer weiteren Ausgestaltung ist vorgesehen, dass diese Leitschaufeln verstellbar sind, falls der Anteil der Spülluft verändert werden soll.

Natürlich kann der hier vereinfacht dargestellte Kältekreislauf auch mehrere Wärmeübertrager auf unterschiedlichen Temperaturniveaus, eine gestufte Druckreduzierung, sowie eine Vielzahl von Sensoren enthalten, wobei die Spüleinrichtungen aber grundsätzlich identisch sind.

Fig. 2 zeigt die Vorrichtung in Fig.1 mit einem zusätzlichen Fortluftkanal. Beim Anschluss derartiger Kanäle ist zu berücksichtigen, dass im Falle einer größeren Leckage, was selten ist, im Fortluftkanal ein zündfähiges Gemisch entstehen könnte. Würde dieses zünden, könnte die Druckwelle nicht nur den Fortluftkanal selbst zerstören, sondern auch in Richtung des Gebäudes durch den Mauerdurchbruch hindurch Wirkung entfalten. Um dies zu sicher zu unterbinden, wird eine Zugabe von Feuerlöschpulver durch einen Vernebler 25 vorgesehen. Hierbei wird, sobald eine Leckage einer signifikanten Größe erkannt wird, das Ventil 27 geöffnet und das Feuerlöschpulver aus dem Pulverlöschbehälter 26 in den Fortluftkanal eingegeben. Durch die Verneblung wird das Feuerlöschpulver fein verteilt und reagiert mit dem entzündlichen Gemisch, noch bevor eine Zündung stattfinden kann.

### Bezugszeichenliste

- 1: Wohngebäude
- 2: Gehäuse
- 3: Verdichter
- 4: Expansionsventil
- 5: Luft-Wärmetauscher
- 6: Heizkreiswärmetauscher
- 7: Anschluss
- 8: Anschluss
- 9: Warmwasserbehälter
- 10: Außenluft
- 11: Abluft
- 12: Fortluft
- 13: Fördergebläse
- 14: Wärmetauscherlüfter
- 15: Frischluft
- 16: Lüftungswärmetauscher
- 17: erwärmte Frischluft
- 18: Teilkapselung
- 18a: Unterteil
- 18b: Oberteil
- 18c: Mittelteil
- 18d: Rückschlagklappe
- 19: Mauerdurchbruch
- 20: gekapseltes Gehäuse Wärmeträgeranschluss
- 21: Teilstrom
- 22: Teilstrom
- 23: Leitschaufel
- 24: Fortluftkanal
- 25: Vernebler
- 26: Pulverlöschbehälter
- 27: Ventil

## Patentansprüche

1. Luft-Wasser-Wärmepumpe mit Belüftungsfunktion zur sicheren Durchführung eines linksdrehenden thermodynamischen Kreisprozesses mittels eines gefährlichen Arbeitsfluids, welches in einem geschlossenen, hermetisch dichten Arbeitsfluidumlauf geführt wird, geeignet zur Aufstellung in einem Gebäude (1), aufweisend
- ein Wärmepumpengehäuse (2),
- mindestens einen Verdichter (3) für Arbeitsfluid,
- mindestens eine Entspannungseinrichtung (4) für Arbeitsfluid,
- mindestens zwei Wärmeübertrager (5, 6) für Arbeitsfluid mit jeweils mindestens zwei Anschlüssen (7, 8) für Wärmeüberträgerfluide,
- mindestens eine Frischluftleitung für Außenluft (10) aus der Umwelt außerhalb des Gebäudes (1) in das Gehäuse (2),
- Leitungen (11) für Abluft aus dem Gebäude (1) in das Gehäuse (2),
- ein Mauerdurchbruch (19) für Fortluft (12) an die Umwelt außerhalb des Gebäudes (1),
- ein Fördergebläse (13) für Abluft (11),
- einen Wärmetauscherlüfter (14) zur Förderung der Fortluft aus dem Gebäude (2),
**dadurch gekennzeichnet, dass**
- eine Teilkapselung (18) bestehend aus einem Unterteil (18a), einem Oberteil (18b), einem Mittelteil (18c) und einer Rückschlagklappe (18d), vorgesehen wird,
- das Unterteil (18a) den Verdichter (3), die Entspannungseinrichtung (4), einen der Wärmeübertrager (6) enthält,
- das Oberteil (18b) die Anschlüsse für Außenluft (10) und Abluft (11) enthält,
- das Mittelteil (18c) den anderen Wärmeübertrager (5), den Wärmetauscherlüfter (14) und Strömungsleiteinrichtungen (23) für Spülluft (21, 22) enthält,
- die Rückschlagklappe (18d) so eingerichtet ist, dass eine Rückströmung in das Abluftsystem über die Abluft (11) unterbunden wird,
- und die Teilkapselung (18) dicht gegenüber den übrigen Einrichtungen des Gehäuses (2) der Wärmepumpe ausgeführt ist.

2. Luft-Wasser-Wärmepumpe nach Anspruch 1, **dadurch gekennzeichnet, dass** eine oder mehrere Leitschaufeln im Luftstrom der Fortluft (12), bevor diese den Mauerdurchbruch (19) erreicht, angeordnet werden, die einen Teilstrom (21) der Fortluft (12) als Spülluft in das Unterteil (18b) der Teilkapselung (18) einleiten.

3. Luft-Wasser-Wärmepumpe nach Anspruch 2, **dadurch gekennzeichnet, dass** die Leitschaufeln verstellbar sind.

4. Luft-Wasser-Wärmepumpe nach einem der Ansprüche 1 bis 3, **dadurch gekennzeichnet, dass** im Anschluss an den Mauerdurchbruch (19) zur Ableitung der Fortluft ein Luftkanal (24) vorgesehen ist, in dem die Zugabe (25) eines Löschmittels (26) im Fall einer Leckage eingerichtet ist.

5. Luft-Wasser-Wärmepumpe nach Anspruch 4, **dadurch gekennzeichnet, dass** als Löschmittel (26) ABC-Pulver oder BC-Pulver eingesetzt und unter Druck vernebelt wird.

6. Verwendung eines gefährlichen Arbeitsfluides in einer Luft-Wasser-Wärmepumpe gemäß einem der vorangegangenen Ansprüche 1 bis 3, **dadurch gekennzeichnet, dass** es sich bei dem gefährlichen Arbeitsfluid um ein in Verbindung mit Luft entzündliches oder explosives Arbeitsfluid handelt.

7. Verwendung eines gefährlichen Arbeitsfluides in einer Luft-Wasser-Wärmepumpe nach Anspruch 6, **dadurch gekennzeichnet, dass** das Arbeitsfluid Propan enthält.

8. Verwendung eines gefährlichen Arbeitsfluides in einer Luft-Wasser-Wärmepumpe nach Anspruch 7, **dadurch gekennzeichnet, dass** das Arbeitsfluid R290 ist.

## Claims

1. Air-to-water heat pump with ventilation function for the safe performance of a counterclockwise thermodynamic cycle using a hazardous working fluid which is conducted in a closed, hermetically sealed working fluid circuit, suitable for installation in a building (1), comprising
- a heat pump housing (2),
- at least one compressor (3) for working fluid,
- at least one expansion device (4) for working fluid,
- at least two heat exchangers (5, 6) for working fluid, each with at least two connections (7, 8) for heat exchange fluids,
- at least one fresh air conduit for external air (10) from the environment outside the building (1) into the housing (2),
- conduits (11) for the exhaust air from the building (1) into the housing (2),
- a wall opening (19) for the discharge air (12) to the environment outside the building (1),
- a conveyor fan (13) for the exhaust air (11),
- a heat exchanger fan (14) for conveying the discharge air from the building (2),
**characterised in that**
- a partial enclosure (18) consisting of a lower part (18a), an upper part (18b), a middle part (18c) and a non-return flap (18d) is provided,
- the lower part (18a) contains the compressor (3), the expansion device (4), one of the heat exchangers (6),
- the upper part (18b) contains the connections for the external air (10) and the exhaust air (11),
- the middle part (18c) contains the other heat exchanger (5), the heat exchanger fan (14) and flow guiding devices (23) for the scavenging air (21, 22),
- the non-return flap (18d) is adapted to prevent a backflow into the exhaust air system via the exhaust air (11),
- and the partial enclosure (18) is configured to be sealed from the remaining components of the heat pump housing (2).

2. Air-to-water heat pump according to claim 1, **characterised in that** one or more guide vanes are arranged in the air flow of the discharge air (12) before it reaches the wall opening (19), which guide vanes introduce a partial flow (21) of the discharge air (12) as scavenging air into the lower part (18b) of the partial enclosure (18).

3. Air-to-water heat pump according to claim 2, **characterised in that** the guide vanes are adjustable.

4. Air-to-water heat pump according to any one of claims 1 to 3, **characterised in that** in the connection to the wall opening (19) for discharging the discharge air an air duct (24) is provided, in which the addition (25) of an extinguishing agent (26) is arranged in the event of a leak.

5. Air-to-water heat pump according to claim 4, **characterised in that** ABC powder or BC powder is used as extinguishing agent (26) and is atomised under pressure.

6. Use of a hazardous working fluid in an air-to-water heat pump according to any one of the preceding claims 1 to 3, **characterised in that** the hazardous working fluid is a working fluid which is flammable or explosive in combination with air.

7. Use of a hazardous working fluid in an air-to-water heat pump according to claim 6, **characterised in that** the working fluid contains propane.

8. Use of a hazardous working fluid in an air-to-water heat pump according to claim 7, **characterised in that** the working fluid is R290.

## Revendications

1. Pompe à chaleur air-eau avec fonction d'aération pour la mise en oeuvre sécurisée d'un processus de cycle thermodynamique tournant dans le sens antihoraire au moyen d'un fluide de travail dangereux, lequel est guidé dans un circuit de fluide de travail fermé et hermétiquement étanche, appropriée pour l'installation dans un bâtiment (1), présentant
- un boîtier de pompe à chaleur (2),
- au moins un compresseur (3) pour le fluide de travail,
- au moins un dispositif de détente (4) pour le fluide de travail, et
- au moins deux échangeurs de chaleur (5, 6) pour le fluide de travail avec respectivement au moins
- deux raccords (7, 8) pour les fluides caloporteurs,
- au moins une conduite d'air frais pour l'air extérieur (10) provenant de l'environnement extérieur du bâtiment (1) dans le boîtier (2),
- des conduites (11) pour l'air d'évacuation du bâtiment (1) dans le boîtier (2),
- un passage mural (19) pour l'air d'évacuation (12) vers l'environnement extérieur au bâtiment (1),
- un ventilateur de transport (13) pour l'air d'évacuation (11),
- un ventilateur d'échangeur de chaleur (14) pour le transport de l'air d'évacuation hors du bâtiment (2),
**caractérisée en ce que**
- une capsule partielle (18) consistant en une partie inférieure (18a), une partie supérieure (18b), une partie centrale (18c) et un clapet anti-retour (18d) est prévue,
- la partie inférieure (18a) contient le compresseur (3), le dispositif de détente (4), l'un des échangeurs de chaleur (6),
- la partie supérieure (18b) contient les raccords pour l'air extérieur (10) et l'air d'évacuation (11),
- la partie centrale (18c) contient l'autre échangeur de chaleur (5), le ventilateur d'échangeur de chaleur (14) et des dispositifs de guidage d'écoulement (23) pour l'air de balayage (21, 22),
- le clapet anti-retour (18d) est agencé de sorte qu'un écoulement de retour dans le système d'évacuation d'air via l'air d'évacuation (11) est empêché,
- et la capsule partielle (18) est réalisée de manière étanche par rapport aux autres dispositifs du boîtier (2) de la pompe à chaleur.

2. Pompe à chaleur air-eau selon la revendication 1, **caractérisée en ce qu'**une ou plusieurs aubes directrices sont agencées dans le flux d'air de l'air d'évacuation (12) avant que celui-ci n'atteigne le passage mural (19), lesquelles introduisent un flux partiel (21) de l'air d'évacuation (12) en tant qu'air de balayage dans la partie inférieure (18b) de la capsule partielle (18).

3. Pompe à chaleur air-eau selon la revendication 2, **caractérisée en ce que** les aubes directrices sont réglables.

4. Pompe à chaleur air-eau selon l'une quelconque des revendications 1 à 3, **caractérisée en ce qu'**un canal d'air (24) est prévu à la suite du passage mural (19) pour l'évacuation de l'air d'évacuation, dans lequel l'ajout (25) d'un agent d'extinction (26) est aménagé en cas de fuite.

5. Pompe à chaleur air-eau selon la revendication 4, **caractérisée en ce que** de la poudre ABC ou de la poudre BC est utilisée comme agent d'extinction (26) et est nébulisée sous pression.

6. Utilisation d'un fluide de travail dangereux dans une pompe à chaleur air-eau selon l'une quelconque des revendications 1 à 3 précédentes, **caractérisée en ce que** le fluide de travail dangereux est un fluide de travail inflammable ou explosif en combinaison avec l'air.

7. Utilisation d'un fluide de travail dangereux dans une pompe à chaleur air-eau selon la revendication 6, **caractérisée en ce que** le fluide de travail contient du propane.

8. Utilisation d'un fluide de travail dangereux dans une pompe à chaleur air-eau selon la revendication 7, **caractérisée en ce que** le fluide de travail est du R290.
